(19)

**Europäisches Patentamt**
**European Patent Office**
**Office européen des brevets**

(11) **EP 4 632 629 A1**

(12) **EUROPEAN PATENT APPLICATION**

(43) Date of publication:
**15.10.2025 Bulletin 2025/42**

(21) Application number: **24169893.5**

(22) Date of filing: **12.04.2024**

(51) International Patent Classification (IPC):
*G06N 3/045* (2023.01)

(52) Cooperative Patent Classification (CPC):
**G06N 3/045; G06N 3/044; G06N 3/08; G06N 3/084;**
**G06Q 30/0202; G06Q 30/02024;** G06Q 50/06

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Hitachi Energy Ltd**
**8050 Zürich (CH)**

(72) Inventors:
- HAQ, Nandinee
 Gloucester, ON, K1T0Y6 (CA)
- FENG, Xiaoming
 Cary, North Carolina, 27519 (US)

(74) Representative: **Vossius & Partner**
**Patentanwälte Rechtsanwälte mbB**
**Siebertstrasse 3**
**81675 München (DE)**

(54) **MACHINE-LEARNING ARCHITECTURE FOR END-TO-END PROBABILISTIC FORECASTING**

(57) State-of-the-art machine-learning models for forecasting fail to address the non-stationarity and uncertainty in data, rely on assumptions about data distribution, and/or produce unusable probability distributions. Accordingly, a machine-learning architecture for end-to-end probabilistic forecasting is disclosed to address these and other problems. In particular, the machine-learning model may utilize a persistence module that outputs a seed forecast value of a target variable, a neural-network stack that predicts incremental forecast value(s) of the target variable (e.g., using back-casting), and an aggregator that aggregates the seed forecast value and the incremental forecast value(s) to produce an aggregate forecast value of the target variable. In an embodiment, this aggregate forecast value may be input to an incremental quantile module that comprises a second neural-network stack to predict the forecast value of the target variable for each of a plurality of quantiles, and which aggregates these forecast values into a probability distribution.

Management System
110
Software
112
Database
114

Network(s)
120

Target System (e.g.,
Power System)
140

Market (e.g.,
Energy Market)
150

User System
130

Third-Party System
160

**FIG. 1**

EP 4 632 629 A1

**Description**

**BACKGROUND**

Field of the Invention

The embodiments described herein are generally directed to machine learning (ML), and, more particularly, a machine-learning architecture for end-to-end probabilistic forecasting.

Description of the Related Art

For participants in a market for energy or ancillary services, accurate forecasting of the market price plays a key role in decision-making. However, accurate forecasting is difficult, since the bidding strategies used by participants are complicated and there are numerous uncertainties that interact with each other in intricate ways. In a competitive market, the intra-day or day-ahead prices of energy or ancillary services can be represented as a time series. These time series of prices are generally characterized by high-frequency components, non-stationarity, seasonality, and/or trends. Moreover, prices are impacted by external factors, such as weather patterns, seasonal variations, and calendar effects (e.g., weekends, holidays, etc.).

Energy traders have begun using machine learning (ML) to forecast future prices based on historical time series of prices. However, state-of-the art ML approaches have focused on one aspect at a time. For example, classical techniques that utilize Autoregressive Integrated Moving Average (ARIMA) fail to characterize the effects of external factors on prices.

State-of-the-art ML approaches also fail to address the non-stationarity of price-related data. For example, a number of ML-based approaches, such as tree-based techniques, treat price forecasting as tabular data prediction and directly model the impact of exogenous variables in prices, but fail to address time-dependent variations and the non-stationary nature of prices. The NeuralProphet model, proposed by Triebe, Oskar, et al., "NeuralProphet: Explainable Forecasting at Scale," arXiv preprint arXiv:2111.15397 (2021), tried to address this issue with a combined framework that incorporates autoregression, non-stationarity with seasonality and trend, and the impact of external factors and events. However, this framework is limited to modeling linear combinations of factors, and fails to model all aspects that impact market prices in a combined end-to-end trainable framework.

In addition, most of these approaches focus on generating deterministic, point-based forecasts, in which a single price forecast is generated for future time points. Such point-based forecasting fails to address the uncertainty in markets, and restricts the use of advanced stochastic optimization techniques for downstream formulation of bidding strategies. In a volatile environment, such as energy markets, stochastic or probabilistic forecasts are more desirable, since they increase awareness to uncertainty and facilitate risk-aware decision-making, for example, through the formulation of uncertainty-aware bidding strategies via stochastic optimization. State-of-the-art techniques that extend point-based forecasting to probabilistic forecasting require parametric techniques that rely on assumptions about the underlying probability model. However, these assumptions are generally not valid in markets for energy and ancillary services, which are of finite range, often bounded by market caps, and highly unsymmetrical.

Quantile methods represent a more flexible and versatile approach for probabilistic forecasting. Quantile methods estimate quantile probability values of the underlying probability distribution model at finite sampling points. This estimation is purely data driven, and does not require the assumption of an underlying probability model. The usual approach to quantile estimation is to train one ML model for a single quantile level at a time, using a quantile loss function (also known as "pinball" loss), where the ML model for one quantile has no information about the ML models for the other quantiles. In this approach, the quantile estimate is produced from separate independent ML models, which increases the complexity of the overall solution. Moreover, quantile crossing is often observed. In quantile crossing, a forecast for a higher quantile crosses the forecast for a lower quantile. Quantile crossing persists even if one ML model is trained to generate the entire probability distribution for all quantiles by optimizing an average quantile loss across all quantile outputs.

The present disclosure is directed to solving one or more of these and potentially other problems discovered by the inventors.

**SUMMARY**

Accordingly, systems, methods, and non-transitory computer-readable media are disclosed for a machine-learning architecture for end-to-end probabilistic forecasting.

In an embodiment, a method comprises using at least one hardware processor to: construct a machine-learning model that comprises a plurality of first neural networks, wherein each of the plurality of first neural networks predicts an incremental forecast value of a target variable at each of one or more future time points based on one or more input features, and an aggregator that aggregates a seed forecast value of the target variable and the incremental forecast values predicted by the plurality of first neural networks to produce an aggregate forecast value of the target variable at each of the one or more future time points; and train the machine-learning model, end to end as a single unit, to forecast the target variable from a plurality of input parameters. The one or more future time points may be a time series of a plurality of future time points separated by a fixed time interval.

The machine-learning model may further comprise a persistence module that determines the seed forecast value. The persistence module may determine the seed forecast value based on at least one historical value of the target variable.

The machine-learning model may further comprise an incremental quantile module that includes a plurality of second neural networks, wherein each of the plurality of second neural networks predicts a value of the target variable at each of the one or more future time points for a respective one of a plurality of quantiles, based on the aggregate forecast value of the target variable. The incremental quantile module may aggregate the predicted values of the target variable, output by the plurality of second neural networks, at the one or more future time points, for all of the plurality of quantiles, into a probability distribution, and wherein the forecast of the target variable comprises the probability distribution. The incremental quantile module may incrementally aggregate the predicted values of the target variable, output by the plurality of second neural networks, from a lowest one of the plurality of quantiles to a highest one of the plurality of quantiles.

The one or more features may comprise at least one temporal attribute of the one or more future time points, an indication of at least one event occurring simultaneously or contemporaneously with the one or more future time points, at least one historical value of the target variable, a value of at least one exogeneous variable, and/or the like. The at least one exogeneous variable may be a forecasted parameter for the one or more future time points. The machine-learning model may further comprise a differential layer preceding the plurality of first neural networks, wherein the differential layer calculates an incremental value of the forecasted parameter between a historical value of the forecasted parameter and a forecast value of the forecasted parameter at the one or more future time points.

The one or more input features may be a plurality of input features, wherein the plurality of first neural networks utilize back-casting in which each of the plurality of first neural networks is applied to a different set of one or more input features, from among the plurality of input features, than at least one or more other ones of the plurality of first neural networks.

The target variable may be a price of energy or ancillary services. The one or more input features may comprise one or more of a value of a forecasted weather parameter, a forecasted load, forecasted power generation, a forecasted outage, or forecasted congestion, for the one or more future time points. The method may further comprise using the at least one hardware processor to: deploy the trained machine-learning model to forecast the price of energy or ancillary services for a future time based on the plurality of input parameters; and after forecasting the price for the future time, generate a market request based on the forecasted price at the future time, and, when the market request comprises a bid to provide energy at the forecasted price, further based on a generation capacity of an electrical system at the future time, or, when the market request comprises an offer to acquire energy at the forecasted price, further based on a load of the electrical system at the future time. The method may further comprise using the at least one hardware processor to, after generating the market request: send the market request to an energy or ancillary-services market; receive an acceptance of the market request; and at the future time, control the electrical system to, when the market request comprises a bid, provide energy according to the accepted market request, or, when the market request comprises an offer, acquire energy according to the accepted market request.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

## BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example infrastructure, in which any of the processes described herein may be implemented, according to an embodiment;

FIG. 2 illustrates an example processing system, by which any of the processes described herein may be executed, according to an embodiment;

FIG. 3 illustrates an example data flow for forecasting, according to an embodiment;

FIG. 4 illustrates an example architecture of a machine-learning model, according to an embodiment;

FIGS. 5A and 5B illustrate examples of a neural-network stack, according to alternative embodiments;

FIG. 6 illustrates an example of an incremental quantile module, according to an embodiment;

FIG. 7 illustrates an example plot of a probability distribution, according to an embodiment;

FIG. 8 illustrates an example process for producing a machine-learning model, according to an embodiment; and

FIG. 9 illustrates an example process for operating a machine-learning model, according to an embodiment.

## DETAILED DESCRIPTION

In an embodiment, systems, methods, and non-transitory computer-readable media are disclosed for a machine-learning architecture for end-to-end probabilistic forecasting. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

### 1. Infrastructure

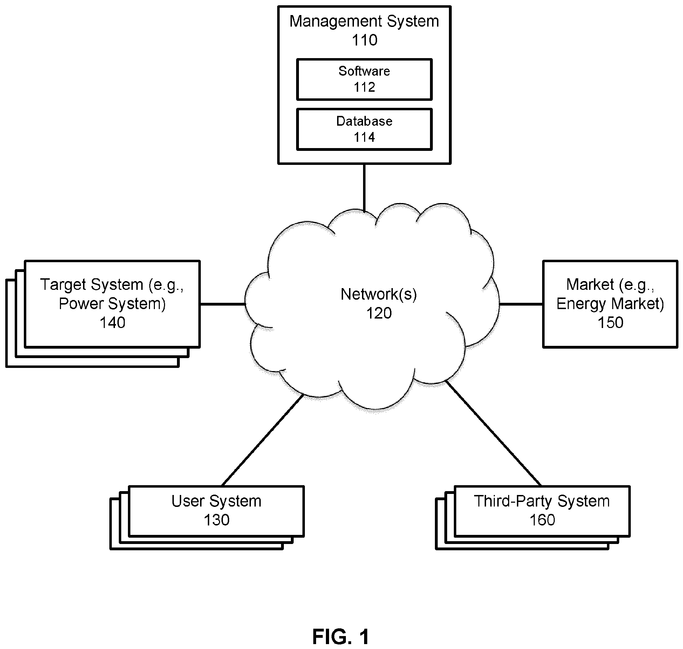

FIG. 1 illustrates an example infrastructure, in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), an asset management system (ASM), and the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected, via one or more networks 120, to one or more user systems 130, target systems 140, markets 150, and/or third-party systems 160.

Network(s) 120 may comprise the Internet, and management system 110 may communicate with user system(s) 130, target system(s) 140, market(s) 150, and/or third-party system(s) 160, through the Internet and/or other network using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks 120. For example, management system 110 may be connected to a subset of user systems 130, target systems 140, markets 150, and/or third-party systems 160 via the Internet, but may be connected to one or more other user systems 130, target systems 140, markets 150, and/or third-party systems 160 via an intranet. Furthermore, while only a few user systems 130, target systems 140, and third-party systems 160, one market 150, one instance of software 112, and one database 114 are illustrated, it should be understood that the infrastructure may comprise any number of user systems 130, target systems 140, markets 150, third-party systems 160, instances of software 112, and databases 114.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a target system 140 and/or a participant in market 150 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g.,

hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Target system(s) 140 may comprise any type or types of system for which data are monitored, analyzed, and/or acted upon. In general, target system 140 may comprise any system for which data are to be forecasted, for example, for participation in market 150 or other exchange. However, in the context of specific, non-limiting examples that are provided throughout the present disclosure, it will be assumed that target system 140 comprises or consists of a power system that is participating as a consumer and/or supplier in a market for energy (i.e., as one example of market 150) and/or ancillary services (i.e., as another example of market 150). A power system may comprise one or more, and generally a plurality of, power resources connected in a network, which may comprise a power distribution network, a power transmission network, a microgrid, and/or the like. The power resources may comprise power generators, energy storage systems, electrical loads (e.g., rechargeable energy storage system or other controllable load, non-controllable load, etc.), and/or the like. The power generators may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. The electrical loads may comprise anything that consumes power, including, without limitation, electric vehicles, appliances, machines, commercial buildings, residential buildings, and/or the like.

Market(s) 150 may comprise any type or types of computing devices capable of wired and/or wireless communication. However, it is generally contemplated that market 150 would comprise one or more servers that implement a market for a tradeable commodity. In the context, of specific, non-limiting examples that are provided throughout the present disclosure, it will be assumed that market 150 is an energy market, through which an energy commodity, such as electricity, heat, and/or fuel, is exchanged, and/or an ancillary-services market, through which ancillary services are bought and sold as a commodity. Market 150 may enable participants to offer an amount of a commodity (e.g., energy, ancillary services, etc.) and bid on an amount of a commodity, as well as match offers to bids, consummate transactions between matched offers and bids, facilitate the transfer or provision of the purchased commodities, and/or the like.

Third-party system(s) 150 may comprise any type or types of computing devices capable of wired and/or wireless communication. However, it is generally contemplated that third-party system 160 would comprise one or more servers that supply extrinsic data to management system 100. These extrinsic data may represent one or more features that are covariates of (i.e., any variable that can influence) a target variable (e.g., a price of energy or ancillary services), and/or represent data from which the one or more features can otherwise be derived.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL™, Oracle™, IBM™, Microsoft SQL™, Access™, PostgreSQL™, MongoDB™, and/or the like, and including cloud-based databases, proprietary databases, and unstructured databases.

## 2. Example Processing Device

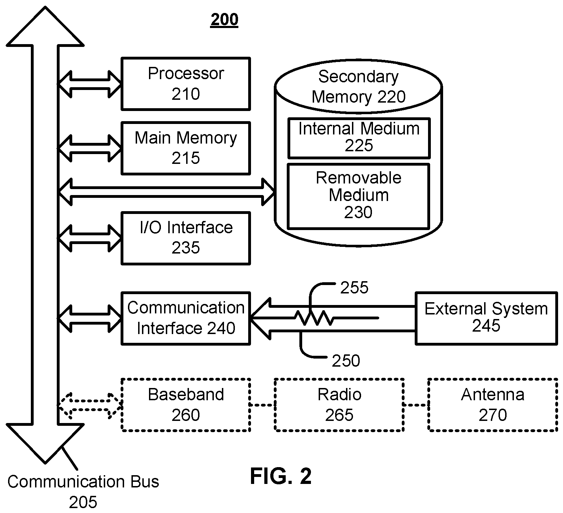

FIG. 2 illustrates an example processing system 200, by which any of the processes described herein may be executed, according to an embodiment. For example, system 200 may be used as or in conjunction with one or more of the processes (e.g., to store and/or execute software 112 implementing disclosed methods or other functions, store database 114, etc.) described herein, and may represent components of management system 110, user system(s) 130, target system(s) 140, market(s) 150, third-party system(s) 160, and/or any other processing devices described herein. System 200 can be a server, conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor 210. Examples of processors 210 which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, any of the processors available from NXP Semiconductors N.V. of Eindhoven, Netherlands, and/or the like.

Processor 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE), including IEEE 488 general-purpose interface bus (GPIB) or IEEE 696/S-100, and/or the like.

System 200 may comprise a main memory 215. Main memory 215 provides storage of instructions and data for programs executing on processor 210, such as one or more of the processes described herein (e.g., implemented in software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer software or executable code, may be transferred to system 200 from external system 245 (e.g., a network server, personal computer, or other device) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated services digital network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer programs (e.g., comprised in software 112), comprising computer-executable code or instructions, are stored in main memory 215 and/or secondary memory 220. Computer programs can also be received via communication interface 240 and stored in main memory 215 and/or secondary memory 220. The computer programs, when executed, enable system 200 to perform one or more of the processes described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245. These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device, a sensor and/or actuator within a target system 140, etc.). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

3. Example Data Flow for Target System Management

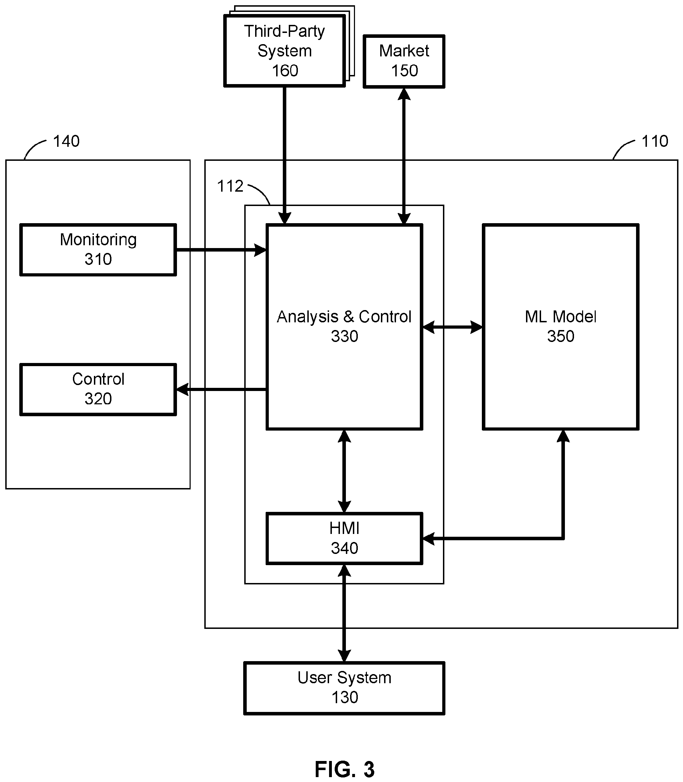

FIG. 3 illustrates an example data flow between a management system 110, a user system 130, a target system 140, a market 150, and one or more third-party systems 160, according to an embodiment. Target system 140 may comprise a monitoring module 310 and a control module 320. Software 112 of management system 110 may comprise an analysis and control module 330, and a human-to-machine interface (HMI) 340. Analysis and control module 330 may interact with or comprise a machine-learning model 350, which may be stored in database 114 of management system 110. It should be understood that communications between the various systems may be performed via network(s) 120. In addition, communications between a pair of modules may be performed via an application programming interface (API) provided by one of the modules or by other inter-process communication means.

Monitoring module 310 may monitor and collect data that are output by one or more sensors in target system 140 (e.g., sensors in the network of a power system). Monitoring module 310 may also otherwise derive data from the collected data. Monitoring module 310 may transmit or "push" the collected and/or otherwise derived data as system telemetry to analysis and control module 330 (e.g., via an API of analysis and control module 330). Alternatively, analysis and control module 330 may retrieve or "pull" the system telemetry from monitoring module 310 (e.g., via an API of monitoring module 310). The system telemetry may include measurements at each of one or more nodes (e.g., buses within a power system) or other points within a network of target system 140. The system telemetry may be communicated from monitoring module 310 to analysis and control module 330 in real time, as data are collected and/or otherwise derived, or periodically. As used herein, the term "real time" includes events that occur simultaneously, as well as events that are separated in time by ordinary delays resulting from latencies in processing, memory access, communications, and/or the like.

Analysis and control module 330 may receive the system telemetry from monitoring module 310, use the system telemetry in conjunction with system model 350 to determine a configuration for target system 140 (e.g., one or more resources in a power system), and then control target system 140 to transition to the determined configuration. In particular, analysis and control module 330 may generate control signals that are transmitted to control module 320 of target system 140. For example, the control signals may be sent via an API of control module 320. The control signals may be communicated from analysis and control module 330 of management system 110 to control module 320 of target system 140 in real time, as the system telemetry is received and analyzed, periodically (e.g., in advance of a sliding future time window), or in response to a user operation. Analysis and control module 330 may control target system 140 automatically (e.g., without any user intervention), semi-automatically (e.g., requiring user approval or confirmation), and/or in response to manual user inputs.

Each third-party system 160 may supply extrinsic data to analysis and control module 330. Third-party system 160 may transmit or push the extrinsic data to analysis and control module 330 (e.g., via an API of analysis and control module 330). Alternatively, analysis and control module 330 may retrieve or pull the extrinsic data from third-party system 160 (e.g., via an API of third-party system 160). The extrinsic data may include any data that are utilized by analysis and control module 330 and that are not available from an intrinsic source, such as monitoring module 310 or database 114. The extrinsic data may comprise or consist of data that are exogenous to target system 140. In the context of target system 140 being a power system and/or market 150 being an energy market, the exogenous data may comprise one or more historical and/or forecasted weather parameters, such as temperature, humidity, solar insolation, wind, barometric pressure, precipitation, alerts, and/or the like, an upcoming calendar effect (e.g., weekend, holiday, etc., within a relevant future time window), an upcoming event (e.g. a forecasted severe weather event, a large gathering of people for a protest, concert, sporting event, etc., a terroristic threat, etc., within a relevant future time window), and/or the like. For example, third-party system 160 may comprise a weather service, such as the United States National Weather Service, a law-enforcement notification service, and/or the like.

Analysis and control module 330 may receive intrinsic data from monitoring module 310 and/or database 114 and/or receive extrinsic data from one or more third-party systems 160, and derive the value of each of one or more input features from the received intrinsic and/or extrinsic data. In addition, analysis and control module 330 may receive historical prices for market 150 (e.g., historical prices for an energy or ancillary services market) from market 150 and/or database 114. The received data may itself comprise the value of an input feature, or the value of an input feature may be otherwise derived (e.g., calculated, inferred, interpolated, imputed, etc.) from the received data. Analysis and control module 330 may input the values of the input features into machine-learning model 350, which may forecast the value of a target variable (e.g., price of energy or ancillary services) at a future time. The future time may comprise one or more future time points, including potentially a time series of future time points representing a future time window.

Based on the forecasted value of the target variable at the future time, output by machine-learning model 350, analysis and control module 330 may generate and send a market request to market 150 for the future time. The market request may be an offer to sell an amount of a commodity, such as an offer to supply an amount of electrical power at the future time or an offer to provide an ancillary service, or a bid for an amount of a commodity, such as a bid to consume an amount of electrical power at the future time or buy an ancillary service. As used herein, the term "ancillary service" may denote any function that helps an operator of a power system to maintain reliability of the power system. Market 150 may receive offers and bids from a plurality of participants, including management system 110, match the bids to offers when possible or else reject bids when no match is possible (e.g., automatically or with approval/denial from market operators), and return the market decisions to the respective participants. The participants, including management system 110, may then make decisions and/or perform operations on target system 140, based on the market decisions.

As an example, analysis and control module 330 may utilize the forecasted values of the target variable at the future time in an optimization algorithm that determines whether it is optimal to sell the commodity at the future time or to buy the commodity at the future time. Based on this determination, analysis and control module 330 may automatically (i.e., without any user involvement), semi-automatically (e.g., with user approval or confirmation via human-to-machine interface 340), or manually (e.g., in response to a manual user request via human-to-machine interface 340) generate and send a market request to market 150. Subsequently, analysis and control module 330 may receive a market decision on the market request from market 150 and, automatically, semi-automatically, or manually initiate a control operation, to change a real-time operation of target system 140 or schedule an operation of target system 140, based on the market decision. Initiation of the control operation may comprise transmitting control commands to control module 320 of target system 140, which may responsively control target system 140 according to the control commands.

Control module 320 of target system 140 receives the control signals from analysis and control module 330, and controls one or more components of target system 140 in accordance with the control signals. In the context of a power system, examples of such control include, without limitation, setting a setpoint (e.g., active and/or reactive power for power generators, voltage, etc.), adjusting the power output of a power generator, adjusting the charging or discharging of an energy storage system, adjusting the power input to a load, activating or deactivating a load, closing or opening a switch (e.g., circuit breaker), and/or the like.

As an example, in the context of an energy market, target system 140 may be a power system, and the target variable, forecasted by machine-learning model 350, may be an energy price. After the value of the energy price is forecasted for a future time, a market request may be generated based on the forecasted value of the energy price at the future time. In the event that the market request comprises a bid to sell energy at the forecasted value of the energy price, the market request may also be based on a generation capacity (e.g., forecasted generation capacity) of the power system at the future time. In the event that the market request comprises an offer to buy energy at the forecasted value of the energy price, the market request may also be based on a load (e.g., forecasted load) of the power system at the future time. In either case, after generating the market request, the market request may be sent to market 150, and an acceptance or rejection of the market request may be responsively received. Assuming an acceptance of the market request is received, the power system may be controlled at the future time to, if the market request comprises a bid, generate power according to the accepted market request, or, if the market request comprises an offer, consume power according to the accepted market request. In other words, control module 320 may control one or more resources of the power system to provide or consume energy, ancillary services, or another commodity at the future time.

Human-to-machine interface 340 may generate a graphical user interface that is transmitted to user system 130 and receive inputs to the graphical user interface via user system 130. The graphical user interface may provide information regarding the current state of target system 140 determined from the system telemetry, a predicted state of target system 140 determined by analysis and control module 330, a configuration of target system 140 determined by analysis and control module 330, a market request, decision, or recommendation for target system 140 determined by analysis and control module 330, a control decision or recommendation for target system 140 determined by analysis and control module 330, and/or the like. In addition, the graphical user interface may provide inputs that enable a user of user system 130 to configure settings of analysis and control module 330, train, configure, test, and/or deploy machine-learning model 350, generate and/or send market requests to and/or otherwise participate in market 150, accept or reject market requests, decisions, or recommendations, specify, approve, and/or reject controls to be transmitted to control module 320 of target system 140, analyze target system 140, and/or the like.

Machine-learning model 350 may be stored as a data structure in database 114 and accessed by modules, such as analysis and control module 330, via any known means (e.g., via an API of database 114, a direct query of database 114, etc.). For example, machine-learning model 350 may be loaded into memory (e.g., 215 and/or 220) from database 114 and executed by management system 110 as a service (e.g., as a microservice) that is accessible to analysis and control module 330 via an API. Management system 110 may provide an individual machine-learning model 350 for each target system 140 that is managed by management system 110, and/or a collective machine-learning model 350 that is used for two or more target systems 140.

## 4. Example Architecture of Machine-learning model

In a volatile environment, such as energy markets, stochastic and/or probabilistic forecasts are desirable, since these increase awareness to uncertainty and facilitate risk-aware decision-making. For example, an uncertainty-aware bidding strategy may be formulated via stochastic optimization. However, while point-based forecasting has been extended to parametric probabilistic forecasts, state-of-the-art techniques are distribution-based and are not generally applicable to generating probabilistic forecasts for prices in energy and ancillary-services markets, in which market prices do not follow a parametric distribution.

Accordingly, embodiments of machine-learning model 350 provide end-to-end non-parametric probabilistic forecasting, and is capable of modeling multiple factors that may impact market 350. Machine-learning model 350 may characterize both the autoregressive nature of prices and the impact of external factors, such as weather, load, calendar effects, events, other temporal attributes, and/or the like.

As used herein, the term "end-to-end" refers to a machine-learning model 350 that forecasts a final target variable (e.g., price of energy or ancillary service) based on one or more, and generally a plurality of, input parameters, without any intermediate manual steps. In an embodiment, machine-learning model 350 is trained, end to end as a single unit, to forecast the target variable from a plurality of input parameters. In other words, all of the components of machine-learning model 350 are assembled and trained collectively, as opposed to being trained individually and then assembled. Advantageously, because machine-learning model 350 is trained end to end, machine-learning model 350 can learn the impacts of all factors together, to generate point-based or distribution-free probabilistic forecasts for market 150. In addition, less retraining of machine-learning model 350 will generally be required.

In an embodiment, machine-learning model 350 incorporates aggregation, which may start from the most recent value of the target variable (e.g., price) as a seed forecast value, and utilize a neural-network stack to produce incremental forecast value(s) of the target variable that are aggregated with the seed forecast value to produce an aggregate forecast value. While the seed forecast value is preferably based on the most recent value(s) of the target variable that are available, the seed forecast value could be based on less recent historical value(s) of the target variable, may be a fixed or constant value, or may be computed or otherwise determined based on non-historical values of the target variable or in any other suitable manner. In any case, the seed forecast value represents an initialization value or starting point for the forecast value of the target variable and is aggregated with one or more incremental forecast values of the target variable to produce an aggregate forecast value of the target variable. In an embodiment, the aggregate forecast value of the target variable is a sum of the seed forecast value and the incremental forecast value(s) of the target variable. Advantageously, this aggregational approach addresses the non-stationarity and time-dependent similarity of prices in market 150, and produces a more accurate forecast, with less complex modeling (i.e., relative to state-of-the-art models that are designed to account for non-stationarity, seasonality, and trends in data), and which is capable of reacting more quickly to changing dynamics in market 150.

At a high level, instead of state-of-the-art ML models, which learn to forecast an exact value of the target variable from input parameters, the neural-network stack learns the deviations in the target variable from the deviations in the input parameters. The idea behind this approach is that, while the target variable and external factors can be non-stationary, the deviations in the target variable and external factors are relatively stationary. Thus, the neural-network stack utilizes incremental forecast values to capture these deviations. It should be understood that an "incremental" value (e.g., incremental forecast value) may be either positive or negative, such that the portion may be added or subtracted, respectively, from a base value (e.g., seed forecast value).

In an embodiment, the architecture of machine-learning model 350 is non-parametric and data-driven. This means that no assumption is made on the distribution of the target variable. Advantageously, non-reliance on assumptions about the distribution of the target variable may increase the accuracy and adaptability of price forecasting for market 150.

The non-parametric probabilistic forecast may be formulated as a problem of estimating quantile forecasts. In particular, an incremental quantile module may be used to aggregate predicted values of the target variable, output by a second neural-network stack, for each of a plurality of quantiles, subject to a non-crossing constraint of the quantiles. In other words, machine-learning model 350 is trained to directly generate quantile forecast values of the target variable at different quantiles. By varying quantile levels from zero (0%) to one (100%) at specified quantile intervals, which may either be equal or unequal in width, the value of the target variable can be forecast at different quantiles to collectively provide a discrete approximation of the overall probability distribution of the target variable. Advantageously, this approach, of training machine-learning model 350 to directly generate quantile forecasts at different quantiles without any assumption on the probability distribution, is more flexible than state-of-the-art approaches.

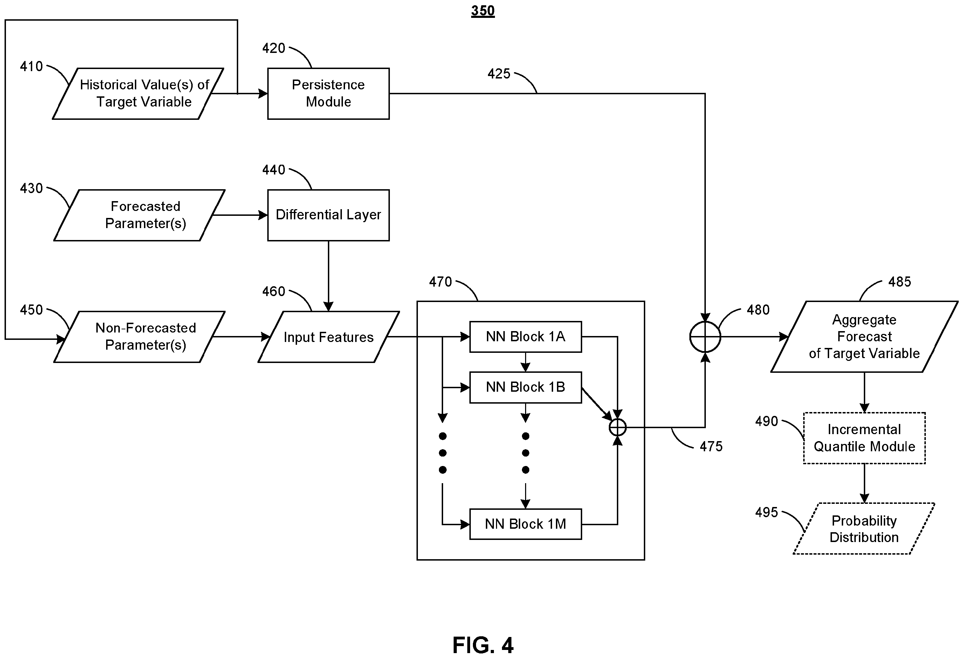

FIG. 4 illustrates an example architecture for machine-learning model 350, according to an embodiment. Machine-learning model 350 may comprise or consist of a persistence module 420, a differential layer 440, a neural-network stack 470, an aggregator 480, and/or an incremental quantile module 490. It should be understood that machine-learning model 350 may comprise any subset of these components without necessarily comprising all of the components, and/or may comprise additional components. For example, if a point-based forecast is desired, incremental quantile module 490 may be omitted. In this case, persistence module 420 and neural-network stack 470 generate forecasts of the target variable, which are then aggregated by aggregator 480 to produce a final point-based aggregate forecast 485 of the target variable. Alternatively, if a probability distribution is desired, incremental quantile module 490 may be included within the architecture of machine-learning model 350. In this case, the point-based aggregate forecast 485 of the target variable, output by aggregator 480, is input into incremental quantile module 490 to generate a probability distribution 495 comprising monotonically increasing quantile forecasts of the target variable. Monotonicity, in this context, means that forecasted values for higher quantiles are never lower than forecasted values for lower quantiles.

Machine-learning model 350 outputs a forecast of the target variable. This forecast may comprise a single value (e.g., aggregate forecast 485) or a probability distribution (e.g., probability distribution 495) of the target variable at a single future time point or at each of a plurality of future time points in a time series representing a future time window. In the case of a time series, the time series may comprise a value or probability distribution of the target variable at each of the plurality of future time points, spanning the future time window. The plurality of future time points may be separated in time, for example, by a fixed time interval. Alternatively, the plurality of future time points could be separated in time by time intervals of varying length.

For the purposes of examples described throughout the present disclosure, x will denote values of input features, y will denote values of the target variable, t will denote the current time point, $h$ will denote the forecasting horizon over which the value of the target variable is to be forecast (e.g., the number of future time points in the time series representing the future time window), $l$ will denote a temporal difference or "lag" between historical and future time points, and q will denote values of the target variable for a plurality of quantiles. Lag $l$ may be greater than or equal to horizon $h$. For simplicity, it will be assumed that the time points are spaced apart in time by a fixed time interval, and that machine-learning model 350 forecasts the target variable at or starting from a future time point that is one time interval in the future (i.e., t + 1).

Persistence module 420 is configured to determine a seed forecast 425 that is output to aggregator 480, to be used by aggregator 480. "Persistence," in this context, refers to the utilization of historical data to produce forecast data. In an embodiment persistence module 420 determines seed forecast 425 based on at least one historical value 410 of the target variable. For example, persistence module 420 may select the most recent historical value 410 of the target variable as the value of seed forecast 425, may compute the value of seed forecast 425 from a plurality of historical values 410 (e.g., time series) of the target variable (e.g., as an average or weighted average, trend, etc.), or the like. It should be understood that, in an embodiment in which a time series of the target variable is being forecast, seed forecast 425 may also comprise a time series. In this case, the time series may comprise a seed forecast value for each of the plurality of future time points in the time series. The seed forecast values in the time series may comprise or consist of the historical values of the target variable in a historical time series have the same length as the future time series and immediately preceding the current time point t. As an example, persistence module 420 may receive $y_{t-l:t}$, representing historical value(s) of the target variable from the time point t - $l$ to the current time point $t$, as an input, and output $y_{t-h:t}$, representing historical value(s) of the target variable from the time point t - $h$ to the current time point t, as seed forecast 425. It should be understood that, in this case, $l$ must be greater than or equal to $h$. By using historical value(s) 410 of the target variable, machine-learning model 350 does not need to learn the non-stationarity in the target variable.

Neural-network (NN) stack 470 operates on one or more, and generally a plurality of, input features 460. Input features 460 may represent internal factors and/or external factors, and be derived from forecasted parameters 430 and/or non-forecasted parameters 450. Examples of input features 460, include, without limitation, at least one temporal attribute of the future time point(s) for which the target variable is being forecasted, an indication of at least one event occurring simultaneously with (i.e., occurring at the same time as) or contemporaneously with (e.g., leading up to) the future time point(s) for which the target variable is being forecasted, at least one historical value (e.g., historical value(s) 410) of the target variable, at least one exogenous variable, and/or the like. The exogenous variable(s) may comprise a forecasted parameter 430 for the future time point(s). In an embodiment in which the target variable is a price of energy or ancillary services, forecasted parameter(s) 430 may comprise a forecasted weather parameter, a forecasted load, forecasted power generation, a forecasted outage, forecasted congestion, a forecasted fuel price, or the like, for the future time point(s).

In an embodiment, differential layer 440 may calculate an incremental value of at least one forecasted parameter 430. In particular, differential layer 440 may calculate the incremental value as a difference or other deviation between a historical value of the forecasted parameter 430 and a forecast value of the forecasted parameter 430 at each of the future time point(s). In other words, differential layer 440 may receive a forecast value of the forecasted parameter 430 for each future time point, determine a historical value of the same forecasted parameter 430 that precedes the forecast value in time by lag $l$, and output an incremental value (i.e., deviation) between the historical value and the forecast value of the forecasted parameter 430. The historical value of the forecasted parameter 430 may be chosen as the value of the forecasted parameter 430 that precedes the forecast value of the forecasted parameter 430, in time, by a temporal distance equal to the lag $l$ and/or forecast horizon $h$. It should be understood that this temporal distance between the historical value and forecast value of each forecasted parameter 430, used by differential layer 440, may be identical to the temporal distance, between historical value(s) 410 and seed forecast 425 of the target variable, used by persistence module 420. As an example, differential layer 440 may calculate and output, for a set of one or more forecasted parameters 430, $x_{t-h:t} - x_{t+1:t+h}$. Embodiments of differential layer 440 are described in U.S. Provisional Patent No. 63/601,730, filed on November 21, 2023, which is hereby incorporated herein by reference as if set forth in full.

In an alternative embodiment, differential layer 440 may be omitted, such that one or more input features 460 are directly derived from forecasted parameter(s) 430. In another alternative embodiment, one or more input features 460 are directly derived from a first subset of forecasted parameters 430, while one or more other input features 460 are derived from the incremental value(s), output by differential layer 440, of a second subset of forecasted parameters 430.

Input features 460 may comprise and/or otherwise be derived (e.g., calculated) from one or more forecasted parameters 430, including potentially from the incremental value of one or more forecasted parameters 430 output by differential layer 440, and/or from one or more non-forecasted parameters 450. Although not explicitly illustrated, forecasted parameter(s) 430 may be pre-processed before being input to differential layer 440 and/or after being output from differential layer 440, before any input feature(s) 460 are derived therefrom. Similarly, non-forecasted parameter(s) 450 may be pre-processed before any input feature(s) 460 are derived therefrom. In any case, input features 460 may be concatenated together (e.g., in a feature vector) and input to neural-network stack 470.

Non-forecasted parameter(s) 450 may comprise historical value(s) (e.g., a single value or time series of values) of each of one or more parameters. In an embodiment, non-forecasted parameter(s) 450 comprise historical value(s) 410 of the target variable. Non-forecasted parameters 450 may also comprise one or more parameters representing external factors, such as calendar effects (e.g., weekends, holidays, hour of the day, day of the week, day of the year, season, etc.), indications of events, parameters related to events, and/or any other parameter for which forecasted values are not available.

Neural-network stack 470 may comprise a plurality of neural-network blocks, illustrated as neural-network blocks 1A, 1B, ..., 1M, wherein M represents the number of neural-network blocks. Each neural-network block may comprise or consist of an artificial neural network. It should be understood that M may be any positive integer, including one, two, three, four, five or more, ten, one hundred, one thousand, one-hundred thousand, one million, or the like. The output of neural-network stack 470, which will be described in greater detail elsewhere herein, is an incremental forecast 475, comprising one or more incremental forecast values of the target variable for each of one or more future time points.

Advantageously, the use of incremental values of a forecast parameter 430, produced by differential layer 440, and of the target variable, produced by neural-network stack 470, addresses the non-stationarity of the external factors that impact the target variable and of the target variable itself, respectively. Essentially, neural-network stack 470 learns the deviations from historical value(s) 410 of the target variable based on the deviations between historical and forecast values in the external factors, derived from forecasted parameter(s) 430 and represented in input features 460. In this manner, neural-network stack 470 does not need to explicitly model long-term trends or seasonality in the target variable. Instead, neural-network stack 470 is focused on modeling how the target variable will deviate from its historical value(s) 410 based on external factors. This enables machine-learning model 350 to quickly react to changes in the patterns of the target variable, and reduces the need for machine-learning model 350 to be retrained.

Aggregator 480, for each future time point, aggregates the seed forecast 425 for that future time point, output by persistence module 420, with the incremental forecast 475 for that future time point, output by neural-network stack 470. In an embodiment, aggregator 480, for each future time point, sums the incremental forecast value(s) in incremental forecast 475 for that future time point with the seed forecast value in seed forecast 425 for that future time point, to produce an aggregate forecast value for that future time point within aggregate forecast 485. The sum may be an unweighted sum or a weighted sum (e.g., weighting seed forecast 425 differently from incremental forecast 475). The output of aggregator 480 is aggregate forecast 485, comprising an aggregate forecast value of the target variable for each of the one or more future time points. It should be understood that, in an embodiment in which there are a plurality of future time points being forecasted, aggregate forecast 485 will comprise a time series of aggregate forecast values for the plurality of future time points. In an embodiment in which machine-learning model 350 omits incremental quantile module 490, aggregate forecast 485 of the target variable may be the final output of machine-learning model 350, and therefore, may represent the final forecast of the target variable. In other words, the forecast of the target variable may comprise $y_{t+1:t+h}$.

In an embodiment in which machine-learning model 350 comprises incremental quantile module 490, aggregate forecast 485 of the target variable is input to incremental quantile module 490. Incremental quantile module 490, which will be described in greater detail elsewhere herein, computes a probability distribution 495 for each future time point from the aggregate forecast value of the target variable for that future time point in aggregate forecast 485. It should be understood that, in an embodiment in which there are a plurality of future time points, probability distribution 495 will be a time series of probability distributions for the forecast values of the target variable. In an embodiment in which machine-learning model 350 comprises incremental quantile module 490, probability distribution 495 may be the final output of machine-learning model 350, and therefore, may represent the final forecast of the target variable. In other words, the forecast of the target variable may comprise $q_{t+1:t+h}$.

5. <u>Neural-Network Stack</u>

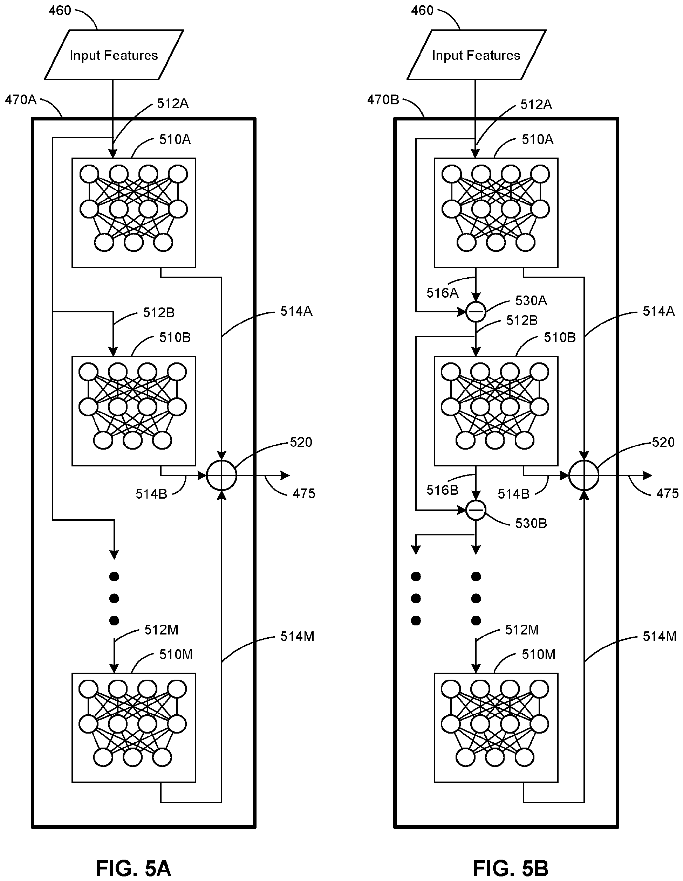

As discussed above, machine-learning model 350 may comprise neural-network stack 470. FIG. 5A illustrates an example of neural-network stack 470A, according to a first embodiment that does not utilize back-casting, whereas FIG. 5B illustrates an example of neural-network stack 470B, according to a second embodiment that does utilize back-casting. In either embodiment, neural-network stack 470 may comprise a plurality of first neural networks 510, illustrated as first neural networks 510A, 510B, ..., 510M, wherein M is any positive integer. In essence, the problem of predicting incremental forecast 475 is divided into a plurality of smaller problems, represented by the plurality of first neural networks 510. The input to neural-network stack 470 is one or more, and generally a plurality of, input features 460. Each of the plurality of first neural networks 510 receives at least a subset of these input feature(s) 460. For example, input feature(s) 512A are provided to first neural network 510A, input feature(s) 512B are provided to first neural network 510B, and input feature(s) 512M are provided to first neural network 510M.

Each of the plurality of first neural networks 510 predicts an incremental forecast value 514 of the target variable at one or more of the future time point(s) based on the input feature(s) 512 that are input to that first neural network 510. For example, first neural network 510A predicts an incremental forecast value 514A based on input feature(s) 512A, first neural network 510B predicts an incremental forecast value 514B based on input feature(s) 512B, and first neural network 510M predicts an incremental forecast value 514M based on input feature(s) 512M. It should be understood that each incremental forecast value is a value that represents only a portion of the overall value of the target variable for a future time point. It should also be understood that, in an embodiment in which there are a plurality of future time points, each first neural network 510 may output a time series of incremental forecast values for the plurality of future time points. Each first neural network 510 in neural-network stack 470 may output an incremental forecast value 514 of the target variable in the same manner, regardless of whether or not back-casting is used.

Each first neural network 510 may comprise any suitable type and/or architecture of artificial neural network. The plurality of first neural networks 510 in neural-network stack 470 may all have the same type and/or architecture, or one or more first neural networks 510 may have a different type and/or architecture than one or more other first neural networks 510. In an embodiment, each first neural network 510 may comprise or consist of a multi-layer neural network (e.g., a deep-learning neural network).

In an embodiment, neural-network stack 470 comprises an aggregator 520 that aggregates all of the incremental forecast values 514, predicted by the plurality of first neural networks 510, into incremental forecast 475 of the target variable. In an embodiment, aggregator 520, for each future time point, sums the incremental forecast values predicted by the plurality of first neural networks 510 for that future time point into a single aggregate incremental forecast value for that future time point, to be provided to aggregator 480 in incremental forecast 475. The sum may be an unweighted sum or a weighted sum (e.g., weighting each incremental forecast value differently from the other incremental forecast values). For each future time point, the incremental forecast value for that future time point in incremental forecast 475 may then be summed, by aggregator 480, with the respective seed forecast value for that future time point in seed forecast 425. In an alternative embodiment, aggregator 520 may be omitted, such that each incremental forecast value 514, predicted by each of the plurality of first neural networks 510, for each future time point, is output directly to aggregator 480. In this case, aggregator 480, for each future time point, aggregates all of the incremental forecast values 514 (e.g., 514A-514M) for that future time point with the respective seed forecast value for that future time point in seed forecast 425. In either case, it should be understood that, for a given future time point, all of incremental forecast values 514 (e.g., 514A-514M) collectively represent a predicted difference in the value of the target variable between seed forecast 425 and aggregate forecast 485 for that future time point.

In neural-network stack 470A, in which back-casting is not utilized, each set of input features 512 may comprise all of input features 460. For example, input features 512A, 512B, ..., 512M may all be identical, such that all of input features 460 are input to each of the plurality of first neural networks 510. Alternatively, each set of input features 512 may differ from one or more other sets of input features 512 in an overlapping manner (e.g., sharing a common subset of input features 460) or non-overlapping manner (e.g., not sharing any common subset of input features 460). For example, input features 512A may differ from input features 512B and/or 512M, with or without overlap.

In neural-network stack 470B, in which back-casting is utilized, each of the plurality of first neural networks 510 is applied to a different set of input feature(s) 512, from among input features 460, than at least one or more other ones of the plurality of first neural networks 510, in an overlapping or non-overlapping manner. For example, input feature(s) 512B may differ from input feature(s) 512A, and input feature(s) 512M may differ from input feature(s) 512A and 512B. The sets of input feature(s) 512 may differ from each other in terms of the values of input features 460 included in each set of input feature(s) 512 and/or the set or subset of input features 460 that are included within each set of input feature(s) 512.

In an embodiment, to implement back-casting, a back-cast component 516 is output by each of at least a subset of the plurality of first neural networks 510. For instance, this subset may consist of first neural network 510A, first neural network 510B, and all of the other first neural networks 510, within neural-network stack 470B, except for the final first neural network 510M, for which a back-cast component 516 is unnecessary. Alternatively, even first neural network 510M could output a back-cast component 516. It should be understood that back-cast component 516 may be output separately from incremental forecast value(s) 514 of the target variable.

The set of input feature(s) 512 that are input to a particular first neural network 510 and the back-cast component 516 that is output by the particular first neural network 510 may be aggregated, by a respective aggregator 530, to produce a set of input feature(s) 512 for the immediately subsequent first neural network 510. The aggregation performed by aggregator 530 may comprise subtracting back-cast component 615, output by a respective first neural network 510, from the set of input feature(s) 512 that were input to that respective first neural network 510. For example, first neural network 510A receives input feature(s) 512A and outputs back-cast component 516A, which are both provided to aggregator 530A, which may subtract back-cast component 516A from input feature(s) 512A and provide the difference as input feature(s) 512B to first neural network 510B. Similarly, first neural network 510B receives input feature(s) 512B and outputs back-cast component 516B, which are both provided to aggregator 530B, which may subtract back-cast component 516B from input feature(s) 512B and provide the difference as input feature(s) 512 to the immediately subsequent first neural network 510. It should be understood that this process continues until a final set of one or more input features 512M are provided to final first neural network 510M.

In an embodiment in which the back-casting produces sets of input feature(s) 512 that differ in terms of value, back-cast component 516 may comprise or consist of incremental value(s) of the target variable, predicted by the respective first neural network 510, for one or more historical time points in a historical time window having a length equal to lag $l$. For example, back-cast component 516 of the $i$-th first neural network 510 may comprise or consist of $\hat{y}^i_{t-l:t}$, representing the incremental value of the target variable, predicted by the respective first neural network 510, over a historical time window comprising one or more historical time points between historical time point $t - l$ and current time point t. In this case, back-cast component 516 may be subtracted, by aggregator 530, from historical values of the target variable over the same historical time window. In other words, first neural network 510 is predicting incremental value(s) of the target variable for a historical time window, which are then subtracted from the actual historical value(s) of the target variable during that historical time window (i.e., $y_{t-l:t} - \hat{y}^i_{t-l:t}$). Aggregator 530 may concatenate the resulting difference with the remaining input features 460, to produce the set of input features 512 to be input to the immediately subsequent first neural network 510 (i.e., the ($i + 1$)-th first neural network 510). In this embodiment, the sets of input features 512 (e.g., 512A, 512B, ..., 512M) may differ only in the values of the historical value(s) of the target variable that are included.

In an additional or alternative embodiment in which the back-casting produces sets of input feature(s) 512 that differ in terms of the subset of input features 460 that are included, back-cast component 516 may comprise or consist of the subset of input features 460 that were used by the respective first neural network 510. For example, back-cast component 516 of the $i$-th first neural network 510 may comprise or consist of the subset of input features 460 that were used by the $i$-th first neural network 510. In this case, back-cast component 516 of a first neural network 510 may be removed, by aggregator 530, from input features 512 to that first neural network 510. For instance, if input feature(s) 512A comprise features $\{x_1, x_2, x_3, x_4, x_5\}$ and first neural network 510A utilizes features $\{x_1, x_2\}$ to predict incremental forecast value 514A, back-cast component 516A may comprise features $\{x_1, x_2\}$, and aggregator 530A may remove back-cast component 516 from input feature(s) 512A to produce a set of input feature(s) 512B consisting of $\{x_3, x_4, x_5\}$.

More generally, in neural-network stack 470B, in which back-casting is utilized, the set of input feature(s) 512 input to a subsequent first neural network 510 may depend on the back-cast component 516 output by a preceding first neural network 510. For example, input feature(s) 512B may depend on back-cast component 516A that was output by first neural network 510A.

6. <u>Incremental Quantile Module</u>

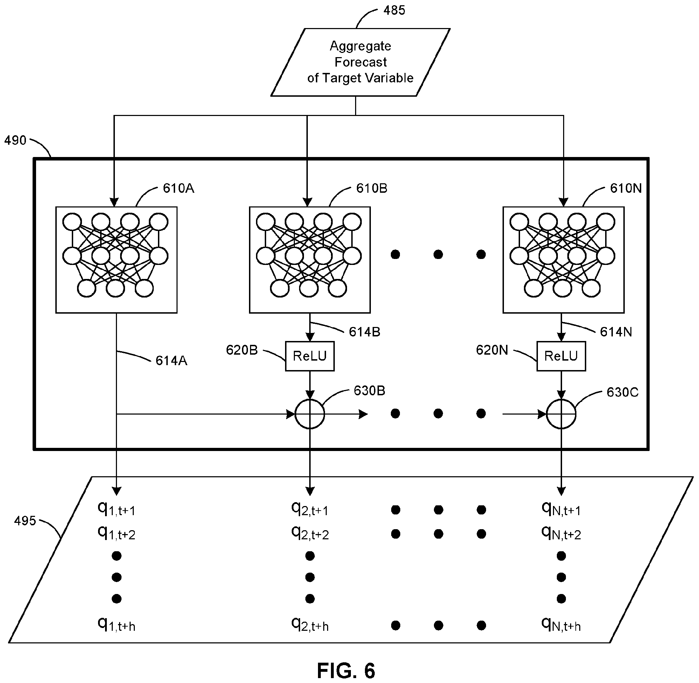

FIG. 6 illustrates an example of incremental quantile module 490, according to an embodiment. The input to incremental quantile module 490 is aggregate forecast 485 of the target variable, which may comprise an aggregate forecast value of the target variable, output by aggregator 480, for each of one or more future time points. Incremental quantile module 490 may comprise a plurality of second neural networks 610, illustrated as second neural networks 610A, 610B, ..., 610N, wherein N is any positive integer. Thus, incremental quantile module 490 represents a second neural-network stack within the architecture of machine-learning model 350 (i.e., in addition to neural-network stack 470).

Aggregate forecast 485 of the target variable may be provided to each of the plurality of second neural networks 610. Each of the plurality of second neural networks 610 predicts a value of the target variable at the future time point(s) for a respective one of a plurality of quantiles, based on aggregate forecast 485 of the target variable. Incremental quantile module 490 aggregates the predicted values of the target variable, output by the plurality of second neural networks 610, at the future time point(s) for all of the plurality of quantiles into probability distribution 495. In an embodiment that comprises incremental quantile module 490, probability distribution 495 is output as the final forecast of the target variable.

Each second neural network 610 may comprise any suitable type and/or architecture of artificial neural network. The plurality of second neural networks 610 in incremental quantile module 490 may all have the same type and/or architecture, or one or more second neural networks 610 may have a different type and/or architecture than one or more other second neural networks 610. In an embodiment, each second neural network 610 may comprise or consist of a multi-layer neural network (e.g., a deep-learning neural network). In an embodiment, the final layer in each second neural network 610 may consist of a single neuron that generates a single predicted value of the target variable for the respective quantile for each future time point.

It should be understood that the number N of second neural networks 610 also represents the number of quantiles. The number N may be any positive integer. In a preferred embodiment, the number M of first neural networks 510 is less than or equal to the number N of quantiles and second neural networks 610. Alternatively, the number M of first neural networks 510 may be greater than the number N of quantiles and second neural networks 610. The number N of quantiles may be chosen according to any one or more design factors, including any computational constraints on machine-learning model 350, with lower values of N representing less computational complexity than higher values of N, but with higher values of N providing higher resolution in probability distribution 495 than lower values of N.

The plurality of second neural networks 610 may be sequentially connected to generate probability distribution 495. In particular, second neural network 610A, which is first within the sequence, predicts value 614A of the target variable at the future time point(s) for the first and lowest quantile, second neural network 610B, which is second within the sequence, predicts value 614B of the target variable at the future time point(s) for the second lowest quantile, and so on and so forth, including second neural network 610N, which is last within the sequence, and which predicts value 614N of the target variable at the future time point(s) for the final and highest quantile. As with values 514 in neural-network stack 470, the predicted values 614 in incremental quantile module 490 may be incremental values.

As illustrated, all of second neural networks 610 (e.g., 610B-610N), following the first second neural network 610A, may comprise a rectified linear unit (ReLU) 620 or other activation function at the output. For example, value 614B of the target variable, predicted by the last layer in second neural network 610B, is provided to rectified linear unit 620B, and value 614N of the target variable, predicted by the last layer in second neural network 610N, is provided to rectified linear unit 620N. A rectified linear unit 620 is a linear activation function that is defined as the positive part of its input:

$$f(x) = x^+ = \max(0, x) = \frac{x + |x|}{2} = \begin{cases} x & if \ x > 0 \\ 0 & otherwise \end{cases}$$

In other words, each rectified linear unit 620 ensures that the value 614 of the target variable, predicted by the respective second neural network 610 and input to that rectified linear unit 620, is always positive.

In addition, each rectified linear unit 620 may be followed by an aggregator 630. Each aggregator 630 aggregates the output of a respective rectified linear unit 620 with a current aggregation of outputs. In an embodiment, each aggregator 630 outputs the sum of its inputs. For example, aggregator 630B may sum the output of rectified linear unit 620B, representing the positive part of value 614B of the target variable, predicted by second neural network 610B, with value 614A of the target variable, predicted by second neural network 610A, and output this sum to the immediately subsequent aggregator 630, as well as to probability distribution 495 as the value $q_2$ of the target variable for the second quantile. This sequential aggregation may continue until the final aggregator 630N performs a final aggregation. In particular, aggregator 630N may sum the output of rectified linear unit 620N, representing the positive part of value 614N of the target variable, predicted by second neural network 610N, with the output of the immediately preceding aggregator 630, and output this sum to probability distribution 495 as the value $q_N$ of the target variable for the final and highest quantile. Notably, value 614A of the target variable, predicted by the first second neural network 610A, may be output directly to probability distribution 495 as the value $q_1$ of the target variable for the first quantile. In summary, incremental quantile module 490 incrementally aggregates the predicted values q of the target variable, output by the plurality of second neural networks 610, sequentially from a lowest one of the plurality of quantiles to a highest one of the plurality of quantiles.

Notably, the combination of rectified linear units 620 and aggregators 630 ensures that each value $q_n$ for a quantile $n$ is less than or equal to the value $q_{n+1}$ for the quantile $n + 1$ immediately above it (i.e., $q_n \leq q_{n+1}$). Thus, $q_1 \leq q_2 \leq \cdots \leq q_N$. Advantageously, this ensures that the quantiles never cross each other. In other words, incremental quantile module 490 implements a non-crossing constraint.

Probability distribution 495 may comprise, for each future time point, the predicted value q of the target variable at each of the plurality of quantiles. In an embodiment that outputs a time series, comprising a plurality of future time points, the predicted values q of the target variable for each quantile may be represented by a curve as a function of time. In other words, each second neural network 610 outputs a time series of predicted values q of the target variable for a respective one of the plurality of quantiles. In this case, probability distribution 495 may comprise a time series for each quantile, illustrated as $q_{1,t+1}, q_{1,t+2}, ..., q_{1,t+h}$ for the first quantile, $q_{2,t+1}, q_{2,t+2}, ..., q_{2,t+h}$ for the second quantile, and so on and so forth, including $q_{N,t+1}, q_{N,t+2}, ..., q_{N,t+h}$ for the last quantile.

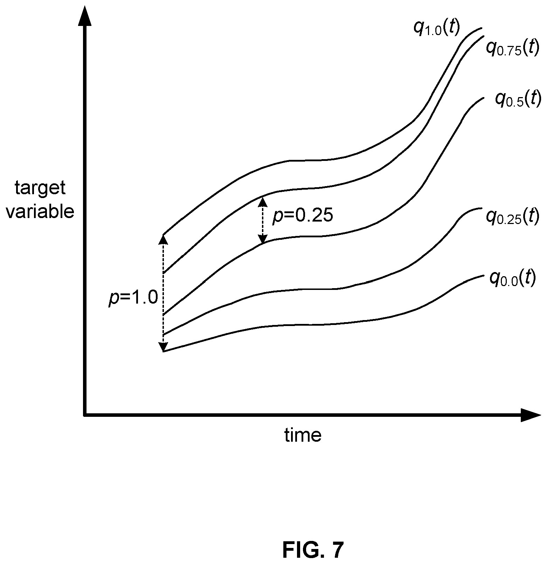

FIG. 7 illustrates an example plot of probability distribution 495 of the value of the target variable over time, according to such an embodiment. In this case, the range of quantiles from 0.0 to 1.0 has been divided into five equally spaced quantiles (i.e., N=5, with a quantile interval of 0.25): the lowest quantile of 0.0 (e.g., the value of the target variable has a 0% probability of being less than the predicted value $q_{0.0}$ of the target variable); the quantile of 0.25 (e.g., the value of the target variable has a 25% probability of being less than the predicted value $q_{0.25}$ of the target variable); the median quantile of 0.5 (e.g., the value of the target variable has a 50% probability of being less than the predicted value $q_{0.5}$ of the target variable); the quantile of 0.75 (e.g., the value of the target variable has a 75% probability of being less than the predicted value $q_{0.75}$ of the target variable); and the highest quantile of 1.0 (e.g., the value of the target variable has a 100% probability of being less than the predicted value $q_{1.0}$ of the target variable). The distance between each adjacent pair of quantile curves for a given future time point represents a band of 0.25 in the probability distribution for that future time point, which means that there is a 25% probability that the value of the target variable will fall within the band. Similarly, the distance between the lowest quantile and the highest quantile represents an overall band of 1.0, which means that there is a 100% probability that the value of the target variable will fall within the overall band.

7. Production of Machine-Learning Model

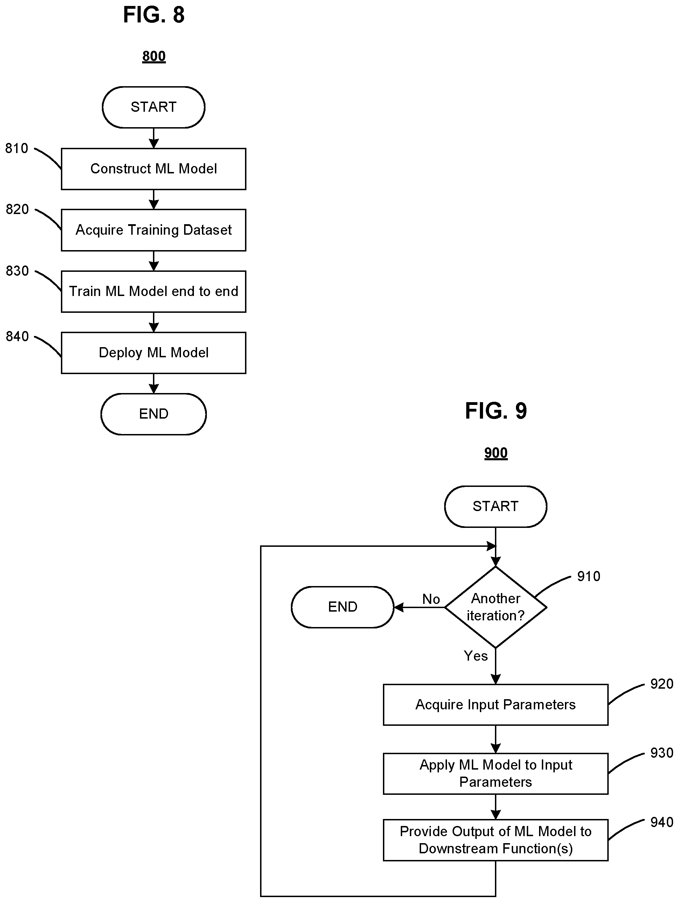

FIG. 8 illustrates an example process 800 for producing machine-learning model 350, according to an embodiment. Process 800 may be implemented by software 112. While process 800 is illustrated with a certain arrangement and ordering of subprocesses, process 800 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

In subprocess 810, machine-learning model 350 may be constructed. In particular, machine-learning model 350 may be constructed to comprise a neural-network stack 470 that includes a plurality of first neural networks 510 that each predicts an incremental forecast value of a target variable at each of one or more future time points (e.g., a time series comprising a plurality of future time points, separated by a fixed time interval) based on one or more input features. The plurality of first neural networks 510 may utilize back-casting in which each of the plurality of first neural networks 510 is applied to a different set of one or more input features, from among a plurality of input features, than at least one or more other ones of the plurality of first neural networks 510. Machine-learning model 350 may also be constructed to comprise an aggregator that aggregates a seed forecast value of the target variable and the incremental forecast values predicted by the plurality of first neural networks 510 to produce an aggregate forecast value of the target variable at each of the one or more future time points. In addition, machine-learning model 350 may be constructed to comprise a persistence module that determines the seed forecast value based on at least one historical value of the target variable.

In an embodiment in which the forecast of the target variable comprises a probability distribution 495, machine-learning model 350 may also be constructed to comprise incremental quantile module 490, which includes a plurality of second neural networks 610 that each predicts a value (e.g., incremental value) of the target variable at each of the one or more future time points for a respective one of a plurality of quantiles, based on the aggregate forecast value of the target variable. Incremental quantile module 490 may aggregate the predicted values of the target variable, output by the plurality of second neural networks 610, at the one or more future time points for all of the plurality of quantiles into probability distribution 495. In particular, incremental quantile module 490 may incrementally aggregate the predicted values of the target variable, output by the plurality of second neural networks 610, from a lowest one of the plurality of quantiles to a highest one of the plurality of quantiles (e.g., sequentially).

In an embodiment, machine-learning model 350 may be constructed to comprise differential layer 440, preceding neural-network stack 470 with the plurality of first neural networks 510. Differential layer 440 may calculate an incremental value of a forecasted parameter between a historical value of the forecasted parameter and a forecast value of the forecasted parameter at the one or more future time points.

In subprocess 820, a training dataset may be acquired. The training dataset may comprise a plurality of records. Each of the plurality of records may comprise a feature vector that includes a value for each input feature 460, and which is labeled with a true forecast of the target variable. This true forecast may comprise or consist of the true value of aggregate forecast 485 (i.e., for point-based forecasting) or the true value of probability distribution 495 (i.e., for probabilistic forecasting). It should be understood that, in this training dataset, the true forecast is actually a historical forecast, such that the value of the true forecast is known with certainty. Input feature(s) 460 may comprise at least one temporal attribute of the one or more future time points, an indication of at least one event occurring simultaneously or contemporaneously with the one or more future time points, at least one historical value of the target variable (e.g., a time series representing a historical time window and comprising a historical value of the target variable at each of one or more historical time points), at least one exogenous variable (e.g., a forecasted parameter), and/or the like.

In subprocess 830, machine-learning model 350, constructed in subprocess 810, is trained end to end, using the training dataset, acquired in subprocess 820, for example, in one or more supervised learning sessions. In particular, machine-learning model 350 is trained end to end as a single unit, to forecast the target variable from a plurality of input parameters. In other words, the components of machine-learning model 350, including neural-network stack 470, aggregator 480, and potentially incremental quantile module 490, are trained together, rather than individually. In an embodiment in which aggregator 480 involves more than a straight summation (e.g., a weighted sum), aggregator 480 may learn weights during the end-to-end training in subprocess 830. Advantageously, by training machine-learning model 350 end to end, neural-network stack 470 will learn the best way for each of the plurality of first neural networks 510 to contribute to incremental forecast 475.

Machine-learning model 350 may be trained by minimizing any suitable loss function, such as root mean square error (RMSE), mean absolute error (MAE), mean absolute percentage error (MAPE), or the like. Alternatively, for probabilistic forecasting (i.e., with incremental quantile module 490), machine-learning model 350 may be trained by minimizing quantile loss, also known as pinball loss, which may be defined as:

$$L_\tau = \begin{cases} (y - q_\tau)\tau, & q_\tau < y \\ (q_\tau - y)(1 - \tau), & q_\tau \geq y \end{cases}$$

wherein $L_\tau$ is the quantile loss, y is the true value of the target variable, and $q_\tau$ is the forecast value of the target variable at quantile $\tau$. Standard gradient-descent-based optimization techniques may be used.

In subprocess 840, machine-learning model 350, as constructed in subprocess 810 and trained in subprocess 830, may be deployed. For instance, machine-learning model 350 may be deployed from a training or development environment to an operating or production environment. As an example, machine-learning model 350 may be deployed with an application programming interface that is accessible to other services executing on management system 110 (e.g., in a microservices architecture), such as analysis and control module 330. Alternatively, machine-learning model 350 may be integrated into analysis and control module 330 and/or stored in database 114.

8. Operation of Machine-Learning Model

FIG. 9 illustrates an example process 900 for operating machine-learning model 350, according to an embodiment. Process 900 may be implemented by software 112. While process 900 is illustrated with a certain arrangement and ordering of subprocesses, process 900 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

In subprocess 910, it is determined whether or not to perform another iteration. While process 900 could consist of a single iteration, it is generally contemplated that process 900 would comprise a plurality of iterations. The iterations may be performed continuously or periodically, for example, according to a time step (e.g., after each expiration of a time interval). In addition, the iterations may be performed indefinitely or for a finite time frame. It should be understood that two or more iterations may be performed serially or in parallel. When another iteration is to be performed (i.e., "Yes" in subprocess 910), process 900 performs an iteration of subprocesses 920-940. Otherwise, when no more iterations are to be performed (i.e., "No" in subprocess 910), operating process 900 may end.

In each iteration, machine-learning model 350 may be used to forecast the target variable for a future time. This future time may be a single future time point or a time series comprising a plurality of future time points representing a future time window. The future time may slide according to a fixed time interval. In an embodiment in which the future time is a time series, the fixed time interval may be equal to or a multiple of the time interval by which the plurality of future time points in the time series are separated. It should be understood that, as the length of the fixed time interval decreases, the resolution of the forecasting increases. While the length of the fixed time interval may be any amount of time, it will generally be dictated by the frequency or sampling rate at which new data used for forecasting become available, the time frame over which bidding occurs in market 150, and/or other design factors. In an embodiment in which market 150 comprises a market for energy and/or ancillary services, a typical length of the fixed time interval may be fifteen minutes, thirty minutes, one hour, twelve hours (e.g., for intra-day forecasting), twenty-four hours (e.g., for daily forecasting), or the like.

In subprocess 920, the input parameters used for forecasting are acquired. As discussed elsewhere herein, these input parameters may comprise forecasted parameter(s) 430 and/or non-forecasted parameter(s) 450, which may include historical value(s) 410 of the target variable. These input parameters may be acquired by actively retrieving and/or passively receiving the input parameters from one or more intrinsic data sources, such as database 114, and/or one or more extrinsic data sources, such as monitoring module 310 of target system 140, market 150, and/or third-party system(s) 160.

In subprocess 930, machine-learning model 350 may be applied to the input parameters acquired in subprocess 920. In particular, the input parameters may be input to machine-learning model 350, which may output a forecast of the target variable. This forecast may comprise aggregate forecast 485 of the target variable at the future time and/or probability distribution 495 of the target variable at the future time. As discussed elsewhere herein, this forecast may be end to end, such that analysis and control module 330 may simply input the input parameters to machine-learning model 350 and receive the forecast in response, without having to perform any additional steps.

In subprocess 940, the output of machine-learning model 350, comprising the forecast of the target variable at the future time, may be provided to one or more downstream functions. For example, the forecast of the target variable may be provided to analysis and control module 330, which may use the forecast to generate a market request (e.g., offer or bid) for market 150 for the future time. It should be understood that, over a plurality of iterations of subprocesses 920-940, the value of the target variable may be forecasted for a continually sliding future time window, which may be used to support continual (e.g., intra-day, day-ahead, etc.) bidding within market 150.

9. <u>Example Application and Implementation</u>

In an embodiment, market 150 comprises an energy market, and machine-learning model 350 is used to forecast prices in the energy market. In this case, the target variable is an energy price (e.g., price per unit of energy, either as a singular value or a probability distribution, at one or more future time points). In an alternative or additional embodiment, market 150 comprises an ancillary-services market, and machine-learning model 350 is used to forecast prices in the ancillary-services market. In this case, the target variable is a price of an ancillary service. In both embodiments, input features 460 are related to an electrical system as target system 140, and may comprise historical value(s) 410 of the price, indications of event(s), parameter(s) related to event(s), calendar effect(s), value(s) of forecasted parameter(s) 430, and/or incremental value(s) of forecasted parameter(s) 430 (e.g., output by differential layer 440). As examples, forecasted parameter(s) 430 may comprise a forecasted weather parameter, a forecasted load, forecasted power generation, a forecasted outage, and/or forecasted congestion, for one or more future time points for which the price is being forecasted.

As an example, machine-learning model 350, trained in subprocess 830, may be deployed in subprocess 840 to, in each iteration of subprocess 930, forecast the price of energy or ancillary services for a future time, based on a plurality of input parameters acquired in subprocess 920. After forecasting the price for the future time, software 112 (e.g., analytics and control module 330 or another module) may generate a market request based on the forecasted price at the future time. When the market request comprises a bid to provide energy at the forecasted price, the market request may be further generated based on a generation capacity of the electrical system at the future time. When the market request comprises an offer to acquire energy at the forecasted price, the market request may be further generated based on a load of the electrical system at the future time. After generating the market request, software 112 may, automatically or semi-automatically, send the market request to market 150 (e.g., an energy or ancillary-services market), receive an acceptance of the market request, and, at the future time, control the electrical system to, when the market request comprises a bid, provide energy according to the accepted market request, or, when the market request comprises an offer, acquire energy according to the accepted market request.

It should be understood that embodiments of machine-learning model 350 may be used to forecast prices for other commodities, besides energy and ancillary services, in other markets 150. Moreover, machine-learning model 350 may be used in other applications, besides energy, ancillary-services, or other markets 150. In other words, machine-learning model 350 may be used to forecast a target variable that is not used for market requests. For instance, machine-learning model 350 may be used to forecast load or demand (e.g., Advanced Metering Infrastructure (AMI) level load, Independent System Operators (ISO) level load, etc.) within an electrical system, power generation (e.g., photovoltaic power generation) within an electrical system, or any other electrical parameter (e.g., voltage, current, etc.) within an electrical system. Machine-learning model 350 may also be used to forecast target variables in non-electrical contexts, such as a weather parameter (e.g., temperature, humidity, solar insolation, wind, barometric pressure, precipitation, etc.).

10. Example Embodiments

Disclosed embodiments may provide numerous advantages over the state of the art. A first objective achievable by disclosed embodiments is a modular, end-to-end trainable machine-learning architecture. A second objective achievable by disclosed embodiments is forecasting that accounts for the non-stationarity of the target variable being forecasted. A third objective achievable by disclosed embodiments is a machine-learning model 350 that is adaptable to changing patterns in the target variable, thereby requiring less retraining. A fourth objective achievable by disclosed embodiments is a non-parametric or distribution-free probabilistic forecast. A fifth objective achievable by disclosed embodiments is a non-crossing constraint. A sixth objective achievable by disclosed embodiments is increased accuracy in forecasting. A seventh objective achievable by disclosed embodiments is a computationally simpler machine-learning model. An eighth objective achievable by disclosed embodiments is training flexibility. To address one or more of these objectives, example embodiments include, without limitation:

Embodiment 1: A method comprising using at least one hardware processor to: construct a machine-learning model that comprises a plurality of first neural networks, wherein each of the plurality of first neural networks predicts an incremental forecast value of a target variable at each of one or more future time points based on one or more input features, and an aggregator that aggregates a seed forecast value of the target variable and the incremental forecast values predicted by the plurality of first neural networks to produce an aggregate forecast value of the target variable at each of the one or more future time points; and train the machine-learning model, end to end as a single unit, to forecast the target variable from a plurality of input parameters. This embodiment may achieve at least the first, second, and third objectives.

Embodiment 2: The method of Embodiment 1, wherein the one or more future time points is a time series of a plurality of future time points separated by a fixed time interval. This embodiment may achieve at least the first, second, and third objectives.

Embodiment 3: The method of any preceding Embodiment, wherein the machine-learning model further comprises a persistence module that determines the seed forecast value. This embodiment may achieve at least the first, second, and third objectives. This embodiment may achieve at least the second and third objectives.

Embodiment 4: The method of Embodiment 3, wherein the persistence module determines the seed forecast value based on at least one historical value of the target variable. This embodiment may achieve at least the second and third objectives.

Embodiment 5: The method of any preceding Embodiment, wherein the machine-learning model further comprises an incremental quantile module that includes a plurality of second neural networks, wherein each of the plurality of second neural networks predicts a value of the target variable at each of the one or more future time points for a respective one of a plurality of quantiles, based on the aggregate forecast value of the target variable. This embodiment may achieve at least the fourth objective.

Embodiment 6: The method of Embodiment 5, wherein the incremental quantile module aggregates the predicted values of the target variable, output by the plurality of second neural networks, at the one or more future time points, for all of the plurality of quantiles, into a probability distribution, and wherein the forecast of the target variable comprises the probability distribution. This embodiment may achieve at least the fourth objective.

Embodiment 7: The method of Embodiment 6, wherein the incremental quantile module incrementally aggregates the predicted values of the target variable, output by the plurality of second neural networks, from a lowest one of the plurality of quantiles to a highest one of the plurality of quantiles. This embodiment may achieve at least the fifth objective.

Embodiment 8: The method of any preceding Embodiment, wherein the one or more features comprise at least one temporal attribute of the one or more future time points. This embodiment may achieve at least the sixth objective.

Embodiment 9: The method of any preceding Embodiment, wherein the one or more features comprise an indication of at least one event occurring simultaneously or contemporaneously with the one or more future time points. This embodiment may achieve at least the sixth objective.

Embodiment 10: The method of any preceding Embodiment, wherein the one or more features comprise at least one historical value of the target variable. This embodiment may achieve at least the sixth objective.

Embodiment 11: The method of any preceding Embodiment, wherein the one or more features comprise a value of at least one exogenous variable. This embodiment may achieve at least the sixth objective.

Embodiment 12: The method of Embodiment 11, wherein the at least one exogenous variable is a forecasted parameter for the one or more future time points. This embodiment may achieve at least the sixth objective.

Embodiment 13: The method of Embodiment 12, wherein the machine-learning model further comprises a differential layer preceding the plurality of first neural networks, and wherein the differential layer calculates an incremental value of the forecasted parameter between a historical value of the forecasted parameter and a forecast value of the forecasted parameter at the one or more future time points. This embodiment may achieve at least the seventh objective.

Embodiment 14: The method of any preceding Embodiment, wherein the one or more input features are a plurality of input features, and wherein the plurality of first neural networks utilize back-casting in which each of the plurality of first neural networks is applied to a different set of one or more input features, from among the plurality of input features, than at least one or more other ones of the plurality of first neural networks. This embodiment may achieve at least the eighth objective.

Embodiment 15: The method of any preceding Embodiment, wherein the target variable is a price of energy or ancillary services. This embodiment may achieve at least the sixth objective.

Embodiment 16: The method of Embodiment 15, wherein the one or more input features comprise one or more of a value of a forecasted weather parameter, a forecasted load, forecasted power generation, a forecasted outage, or forecasted congestion, for the one or more future time points. This embodiment may achieve at least the sixth objective.

Embodiment 17: The method of either Embodiment 15 or 16, further comprising using the at least one hardware processor to: deploy the trained machine-learning model to forecast the price of energy or ancillary services for a future time based on the plurality of input parameters; and after forecasting the price for the future time, generate a market request based on the forecasted price at the future time, and, when the market request comprises a bid to provide energy at the forecasted price, further based on a generation capacity of an electrical system at the future time, or, when the market request comprises an offer to acquire energy at the forecasted price, further based on a load of the electrical system at the future time. This embodiment may achieve at least the sixth objective.

Embodiment 18: The method of Embodiment 17, further comprising using the at least one hardware processor to, after generating the market request: send the market request to an energy or ancillary-services market; receive an acceptance of the market request; and at the future time, control the electrical system to, when the market request comprises a bid, provide energy according to the accepted market request, or, when the market request comprises an offer, acquire energy according to the accepted market request. This embodiment may achieve at least the sixth objective.

Embodiment 19: A system comprising: at least one hardware processor; and software configured to, when executed by the at least one hardware processor, perform the method of any one of Embodiments 1 through 18.

Embodiment 20: A non-transitory computer-readable medium having instructions stored thereon, wherein the instructions, when executed by a processor, cause the processor to perform the method of any one of Embodiments 1 through 18.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

## Claims

1. A method comprising using at least one hardware processor to:

   construct a machine-learning model that comprises

a plurality of first neural networks, wherein each of the plurality of first neural networks predicts an incremental forecast value of a target variable at each of one or more future time points based on one or more input features, and

an aggregator that aggregates a seed forecast value of the target variable and the incremental forecast values predicted by the plurality of first neural networks to produce an aggregate forecast value of the target variable at each of the one or more future time points; and

train the machine-learning model, end to end as a single unit, to forecast the target variable from a plurality of input parameters.

2. The method of Claim 1, wherein the one or more future time points is a time series of a plurality of future time points separated by a fixed time interval.

3. The method of any preceding claim, wherein the machine-learning model further comprises a persistence module that determines the seed forecast value, and preferably
wherein the persistence module determines the seed forecast value based on at least one historical value of the target variable.

4. The method of any preceding claim, wherein the machine-learning model further comprises an incremental quantile module that includes a plurality of second neural networks, wherein each of the plurality of second neural networks predicts a value of the target variable at each of the one or more future time points for a respective one of a plurality of quantiles, based on the aggregate forecast value of the target variable.

5. The method of Claim 4, wherein the incremental quantile module aggregates the predicted values of the target variable, output by the plurality of second neural networks, at the one or more future time points, for all of the plurality of quantiles, into a probability distribution, and wherein the forecast of the target variable comprises the probability distribution.

6. The method of Claim 5, wherein the incremental quantile module incrementally aggregates the predicted values of the target variable, output by the plurality of second neural networks, from a lowest one of the plurality of quantiles to a highest one of the plurality of quantiles.

7. The method of any preceding claim, wherein the one or more features comprise at least one temporal attribute of the one or more future time points, and/or
wherein the one or more features comprise an indication of at least one event occurring simultaneously or contemporaneously with the one or more future time points.

8. The method of any preceding claim, wherein the one or more features comprise at least one historical value of the target variable, and/or
wherein the one or more features comprise a value of at least one exogenous variable.

9. The method of Claim 8, wherein the at least one exogenous variable is a forecasted parameter for the one or more future time points, and preferably
wherein the machine-learning model further comprises a differential layer preceding the plurality of first neural networks, and wherein the differential layer calculates an incremental value of the forecasted parameter between a historical value of the forecasted parameter and a forecast value of the forecasted parameter at the one or more future time points.

10. The method of any preceding claim, wherein the one or more input features are a plurality of input features, and wherein the plurality of first neural networks utilize back-casting in which each of the plurality of first neural networks is applied to a different set of one or more input features, from among the plurality of input features, than at least one or more other ones of the plurality of first neural networks.

11. The method of any preceding claim, wherein the target variable is a price of energy or ancillary services, and preferably wherein the one or more input features comprise one or more of a value of a forecasted weather parameter, a forecasted load, forecasted power generation, a forecasted outage, or forecasted congestion, for the one or more future time points.

**12.** The method of Claim 11, further comprising using the at least one hardware processor to:

deploy the trained machine-learning model to forecast the price of energy or ancillary services for a future time based on the plurality of input parameters; and

after forecasting the price for the future time, generate a market request based on the forecasted price at the future time, and, when the market request comprises a bid to provide energy at the forecasted price, further based on a generation capacity of an electrical system at the future time, or, when the market request comprises an offer to acquire energy at the forecasted price, further based on a load of the electrical system at the future time.

**13.** The method of Claim 12, further comprising using the at least one hardware processor to, after generating the market request:

send the market request to an energy or ancillary-services market;

receive an acceptance of the market request; and

at the future time, control the electrical system to, when the market request comprises a bid, provide energy according to the accepted market request, or, when the market request comprises an offer, acquire energy according to the accepted market request.

**14.** A system comprising:

at least one hardware processor; and

software that is configured to, when executed by the at least one hardware processor,

construct a machine-learning model that comprises

a plurality of first neural networks, wherein each of the plurality of first neural networks predicts an incremental forecast value of a target variable at each of one or more future time points based on one or more input features, and

an aggregator that aggregates a seed forecast value of the target variable and the incremental forecast values predicted by the plurality of first neural networks to produce an aggregate forecast value of the target variable at each of the one or more future time points, and

train the machine-learning model, end to end as a single unit, to forecast the target variable from a plurality of input parameters.

**15.** A non-transitory computer-readable medium having instructions stored thereon, wherein the instructions, when executed by a processor, cause the processor to:

construct a machine-learning model that comprises

a plurality of first neural networks, wherein each of the plurality of first neural networks predicts an incremental forecast value of a target variable at each of one or more future time points based on one or more input features, and

an aggregator that aggregates a seed forecast value of the target variable and the incremental forecast values predicted by the plurality of first neural networks to produce an aggregate forecast value of the target variable at each of the one or more future time points; and

train the machine-learning model, end to end as a single unit, to forecast the target variable from a plurality of input parameters.

**FIG. 1**

**200**

Processor 210

Main Memory 215

I/O Interface 235

Communication Interface 240

Secondary Memory 220

Internal Medium 225

Removable Medium 230

255

250

External System 245

Baseband 260

Radio 265

Antenna 270

Communication Bus 205

**FIG. 2**

**FIG. 3**

**FIG. 4**

**FIG. 5A**

**FIG. 5B**

FIG. 6

FIG. 7

## FIG. 8

800

START

810 Construct ML Model

820 Acquire Training Dataset

830 Train ML Model end to end

840 Deploy ML Model

END

## FIG. 9

900

START

910 Another iteration?

No → END

Yes

920 Acquire Input Parameters

930 Apply ML Model to Input Parameters

940 Provide Output of ML Model to Downstream Function(s)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/186331 A1 (SUBRAMANIAN SHIVARAM [US] ET AL) 15 June 2023 (2023-06-15) * paragraphs [0001] - [0066] * | 1-15 | INV. G06N3/045 |
| A | US 2023/274180 A1 (CHENG XI [US] ET AL) 31 August 2023 (2023-08-31) * paragraphs [0002] - [0037] * | 1-15 | |
| A | US 2023/252267 A1 (SALEH MOEIN [US] ET AL) 10 August 2023 (2023-08-10) * paragraphs [0002] - [0068] * | 1-15 | |
| A | US 11 586 880 B2 (BEIJING JINGDONG SHANGKE INFORMATION TECHNOLOGY CO LTD [CN] ET AL.) 21 February 2023 (2023-02-21) * paragraphs [0001] - [0042] * | 1-14 | |

TECHNICAL FIELDS
SEARCHED (IPC)

G06N

The present search report has been drawn up for all claims

| Place of search | Date of completion of the search | Examiner |
|---|---|---|
| The Hague | 25 September 2024 | Moran, Matthew |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 16 9893

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2024

| Patent document cited in search report | Publication date | Patent family member(s) | | Publication date |
|---|---|---|---|---|
| US 2023186331 A1 | 15-06-2023 | NONE | | |
| US 2023274180 A1 | 31-08-2023 | US | 2023274180 A1 | 31-08-2023 |
| | | WO | 2023164389 A1 | 31-08-2023 |
| US 2023252267 A1 | 10-08-2023 | NONE | | |
| US 11586880 B2 | 21-02-2023 | CN | 110866628 A | 06-03-2020 |
| | | US | 2020074274 A1 | 05-03-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63601730

**Non-patent literature cited in the description**

- **TRIEBE, OSKAR et al.** NeuralProphet: Explainable Forecasting at Scale. *arXiv:2111.15397*, 2021